# EUROPEAN PATENT APPLICATION

(11) **EP 2 461 559 A1**
(43) Date of publication of application: **06.06.2012**
(21) Application number: 10016139.7
(22) Date of filing: 28.12.2010
(51) Int. Cl.: H04M 3/56

(54) **Conference system for independently adjusting audio parameters**

(30) Priority: 03.12.2010 TW 99142096
(71) Applicant: Yare Technologies Inc., Taichung City 406 (TW)
(72) Inventor: Chen, L.T., Pei Tun Rd. 406 Taichung (TW); Huang, Guo Ming, Toku Township Yunlin (TW)
(74) Representative: Zeitler - Volpert - Kandlbinder

(57) **Abstract**

A conference system for independently adjusting audio parameters is provided, including a microphone module , a storage module, a digital signal processing module and an amplifier. When any microphone of the microphone module generates an audio signal transmitted to the digital signal processing module, the priority controller determines the priority order of the audio signals entering the digital signal processing module, the digital signal processing module will read the corresponding adjustment parameters stored in the storage module, and the volume controller, equalizer, feedback suppressor perform adjustment on the audio signal. Finally, the mixer mixes the audio signals and outputs to the amplifier. The amplifier amplifies the mixed audio signal and outputs to speakers. In this manner, a single digital signal processing module can adjust different audio signals from different microphones based on different adjustment parameters, without affecting the audio signal from other microphones.

## Description

### BACKGROUND OF THE INVENTION

### 1. Field of the Invention

This invention relates to a conference system and, more particularly, to a conference system able to independently adjust audio parameters from a plurality of microphones connected in a single-loop and/or dual-loop manner.

### 2. The Related Arts

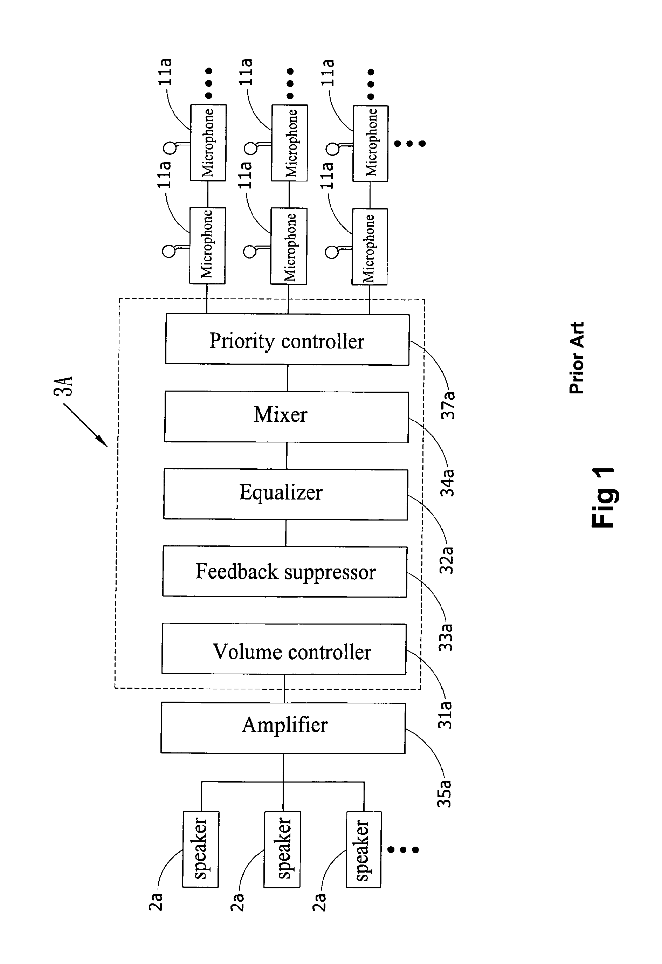

FIG. 1 shows a schematic view of a block diagram of a conventional conference system. As shown in FIG. 1, conference system 3a is connected to a plurality of microphones 11a formed by a plurality of circuit loops. At any given time, only a fixed number of microphones 11a can transmit audio input. When a microphone 11a on the circuit loop wishes to transmit audio input, a priority controller 37a decides which microphone 11a can transmit audio input. When a plurality of microphone 11a start to transmit audio input simultaneously, priority controller 37a will determines the order in which microphones 11a can transmit audio input according to the priority of microphones 11a. For transmitting a plurality of audio inputs, a mixer 34a is used to mix all the audio signals before transmitting. For better audio effects of the audio signal arriving speaker 2a, an equalizer 32a is used to adjust the signal state at each frequency. Finally, a feedback suppressor 33a is used to eliminate the feedback noise, and then output to speaker 2a via amplifier 35a. The above description shows that regardless which microphone 11a the audio input is from, the audio input always undergoes the same equalizer 32a and feedback suppressor 33a for adjustment. However, not all the input signals will require the same adjustment and feedback suppression. Also, when performing feedback suppression on a plurality of microphones 11a, the audio quality outputted by conference system 3a may be poor because of different suppression frequencies for different audio inputs. Sometimes, microphone 11a not requiring feedback suppression is also adjusted unnecessarily.

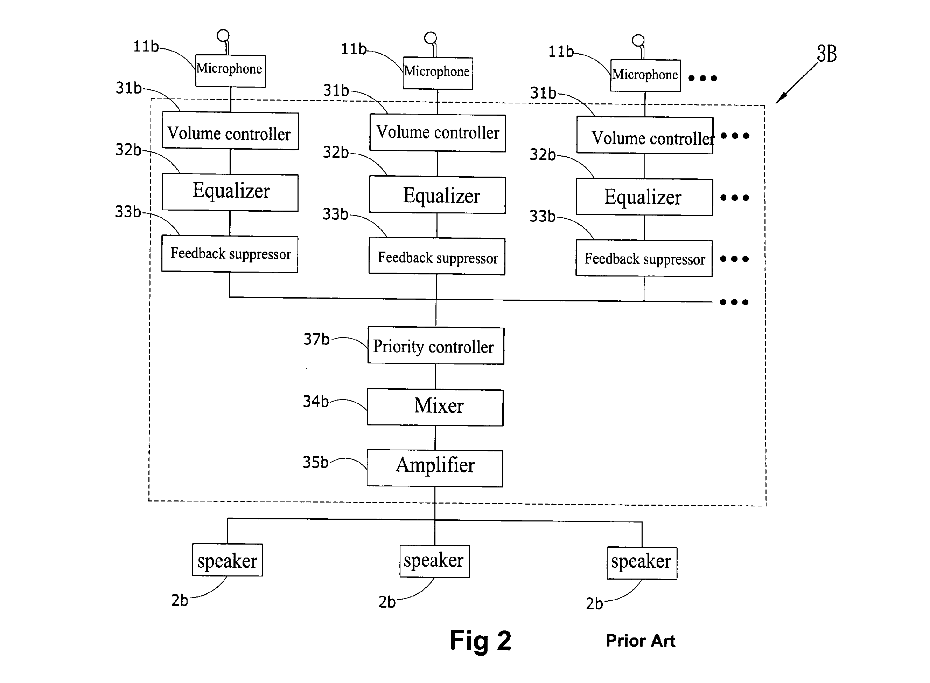

FIG. 2 shows a schematic view of a block diagram of another embodiment of a conventional conference system. To improve the above so-called hand-in-hand cable connection, a star topology is used. Conference system 3b includes a plurality of volume controllers 31 b, a plurality of equalizers 32b, and a plurality of feedback suppressors 33b. When connected to conference system 3b, each microphone 11 b is mapped to a volume controller 31 b, an equalizer 32b and a feedback suppressor 33b. Finally, all are connected and outputted to a priority controller 37b, and then passing through mixer 34b and amplifier 35b to reach speaker 2b. The advantage of this topology is that conference system 3b allows individual adjustment for each microphone 11 b. However, the main disadvantage is that each microphone 11 b must have a separate set of volume controller 31 b, equalizer 32b and feedback suppressor 33b. As a conference system usually will be connected to many microphones 11 b, this type of system must include many sets of volume controller 31b, equalizer 32b and feedback suppressor 33b, which is not only cost for deployment, but also costly for maintenance.

### SUMMARY OF THE INVENTION

To overcome the drawbacks in the conventional technologies, the present invention provides a conference system with independently adjustable audio parameters.

The conference system with independently adjustable audio parameters of the present invention includes:
a microphone module, formed by a plurality of microphones connected in a dual loop, for providing at least one audio signal; a storage module, pre-recorded with audio adjustment parameters for the plurality of microphones; a digital signal processing module, electrically connected to the microphone module and the storage module respectively, for receiving the at least one audio signal and accessing the audio adjustment parameters stored in the storage module; and an amplifier, electrically connected to the digital signal processing module, for amplifying and outputting the audio signal; the digital signal processing module further including:
a priority controller, for determining the priority order for the audio signals to enter the digital signal processing module based on the priority order of the microphones;
a volume controller, electrically connected to the priority controller, for adjusting the volume of the audio signal based on the audio adjustment parameters;
an equalizer, electrically connected to the volume controller, for compensating and rectifying the audio signal based on the audio adjustment parameters;
a feedback suppressor, electrically connected to the equalizer, for eliminating the feedback interference noise based on the audio adjustment parameters; and
a mixer, electrically connected to the feedback suppressor, for mixing and outputting the plurality of audio signals.
Wherein when any microphone of the microphone module generating audio signal and transmitting to the digital signal processing module, the digital signal processing module reading corresponding audio adjustment parameters stored in the storage module, the priority controller of the digital signal processing module determining the priority order of the audio signals to enter the digital signal processing module, and passing the volume controller, the equalizer and the feedback controller for audio signal adjustment, and finally, passing the mixer and the amplifier to output the audio signal to the speaker; in this manner, a single digital signal processing module being able to perform adjustment on different microphones and respective audio signals without interfering audio signals from other microphones.

These and other objects, features and advantages of the invention will be apparent to those skilled in the art, from a reading of the following brief description of the drawings, the detailed description of the preferred embodiment, and the appended claims.

### BRIEF DESCRIPTION OF THE DRAWINGS

The present invention can be understood in more detail by reading the subsequent detailed description in conjunction with the examples and references made to the accompanying drawings, wherein
FIG. 1 shows a schematic view of a block diagram of an embodiment of a conventional conference system;
FIG. 2 shows a schematic view of a block diagram of another embodiment of a conventional conference system;
FIG. 3 shows a schematic view of a block diagram of an embodiment of a conference system according to the present invention; and
FIG. 4 shows a schematic view of a block diagram of another embodiment of a conference system according to the present invention.

### DETAILED DESCRIPTION OF THE PREFERRED EMBODIMENT

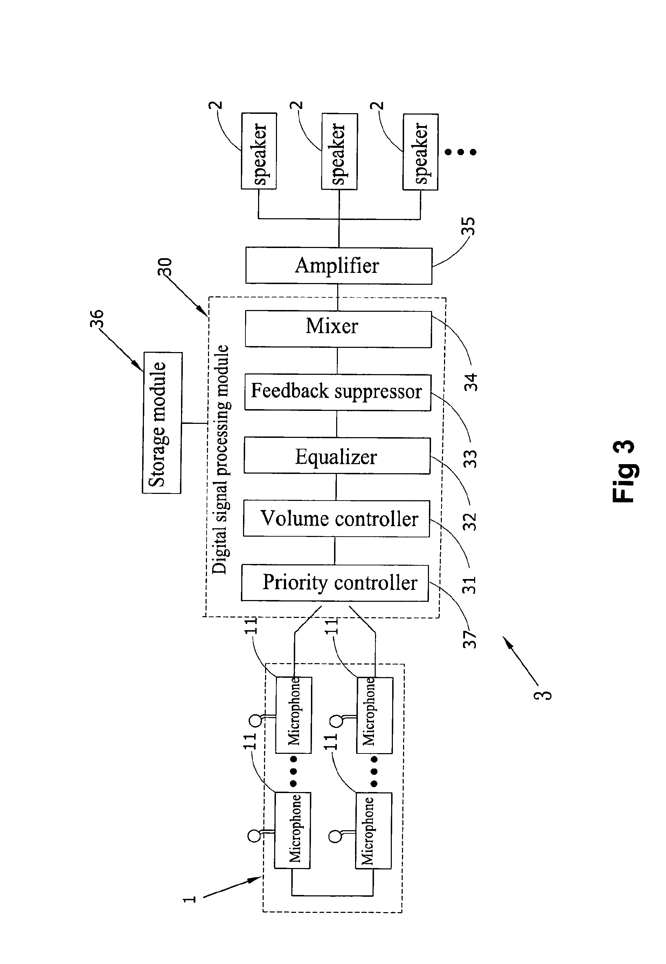

FIG. 3 shows a schematic view of a block diagram of a preferred embodiment of the present invention. As shown in FIG. 3, a conference system 3 with independently adjustable audio input of the present invention includes a microphone module 1, a digital signal processing module 30, an amplifier 35 and a storage module 36, wherein:
(1) microphone module 1 includes a plurality of microphones 11 connected in a single-loop and/or dual-loop manner for generating at least one or more audio signal. The advantage of using a dual-loop connection is that a second loop can still transmit the audio signal when the first loop fails.
(2) storage module 36 is pre-set with the audio adjustment parameters for microphones 11. In other words, when microphone 11 receives the external sound and turns into audio signals, the external sound may be interfered, having noise, or in unexpected sound source status. All the adjustment parameters for correcting the above situations can be pre-stored in storage module 36. Alternatively, every time a new set of adjustment parameters is used, the new adjustment parameters can be stored into storage module 36 for future use. In addition, storage module 36 can be a harddisk, flash memory or memory card.
(3) digital signal processing module 30 is electrically connected to microphone module 1 and storage module 36 for receiving the audio signal and accessing storage module 36 for the audio signal adjustment parameters corresponding to the audio signal. Digital signal processing module 30 further includes a priority controller 37, a volume controller 31, an equalizer 32, a feedback suppressor 33 and a mixer 34, wherein:
   (3.1) priority controller 37 determines the order of the audio signals entering digital signal processing module 30 based on the pre-set priority order of the microphone;
   (3.2) volume controller 31 is electrically connected to priority controller 37, and adjusts the volume of the audio signal based on the corresponding adjustment parameters, when the volume of the audio signal is too loud or to low, volume controller 31 can adjust the volume of the audio signal back to a suitable level;
   (3.3) equalizer 32 is electrically connected to volume controller 31, after the audio signal is adjusted by volume controller 31 and passed to equalizer 32, equalizer 32 compensates and rectifies the audio signal based on the corresponding adjustment parameters;
   (3.4) feedback suppressor 33 is electrically connected to equalizer 32, after the audio signal is inputted to feedback suppressor 33, feedback suppressor 33 eliminates the feedback interference of the audio signal based on the corresponding adjustment parameters; and
   (3.5) mixer 34 is electrically connected to feedback suppressor 33, after the audio signals pass volume controller 31, equalizer 32 and feedback suppressor 33, and is transmitted to mixer 34, mixer 34 mixes a plurality of audio signals and outputs the mixing results
(4) amplifier 35 is electrically connected to digital signal processing module 30, for amplifying the audio signal and outputting to at least one or more speakers 2.

It is worth noting that digital signal processing module, volume controller 31, equalizer 32, feedback suppressor 33, mixer 34, amplifier 35 and priority controller 37 can be in a form of hardware of IC, firmware burned into IC, or software written in programming language, and read and executed by a microprocessor.

In this manner, when any microphone 11 of microphone module 1 generates and transmits the audio signal to digital signal processing module 30, digital signal processing module 30 reads corresponding audio adjustment parameters from storage module 36, and priority controller 37 determines the priority order of the audio signals entering digital signal processing module 30 according to the pre-set priority order of the microphones. Then, the signal processing sequence starts. The signal processing includes the adjustment on the audio signal by volume controller 31, equalizer 32 and feedback suppressor 33, and finally, mixer 34 mixes the audio signals and amplifier 35 amplifies the mixed audio signal and outputs to a speaker 2. In this manner, a single digital signal processing module 30 can adjust different audio signals from different microphones based on different adjustment parameters, without affecting the audio signal from other microphones.

Furthermore, in addition to using priority controller 37 to determine the priority order of the audio signals entering digital signal processing module 30 according to the pre-set priority order of the microphone and using volume controller 31, equalizer 32 and feedback suppressor 33 to adjust the audio signal, digital signal processing module 30 also stores the post-adjustment audio adjustment parameters back to storage module 36 for future use.

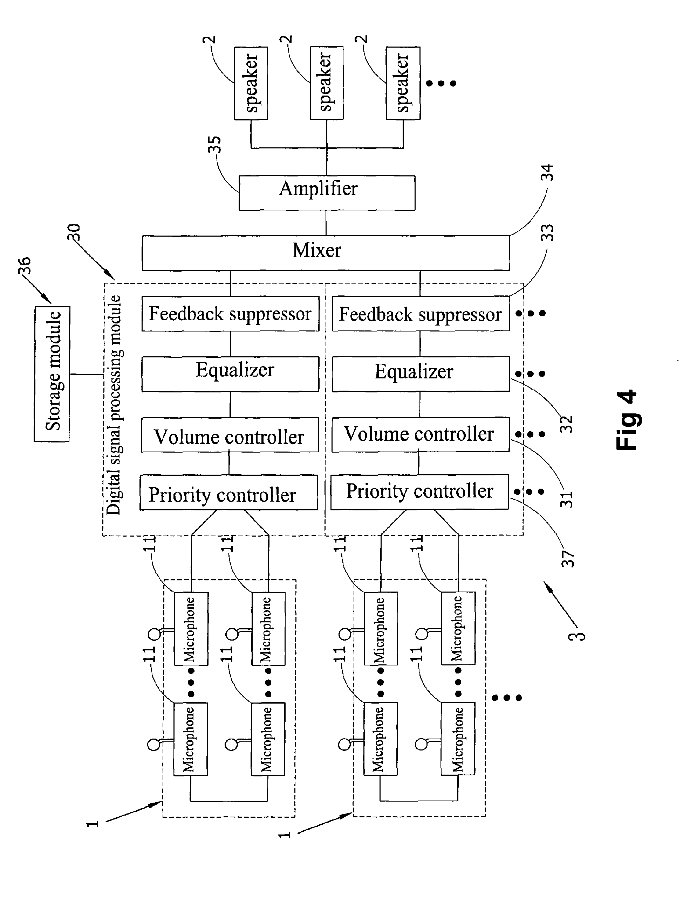

FIG. 4 shows a schematic view of a block diagram of another embodiment of the present invention. As shown in FIG. 4, the difference between this embodiment and the first embodiment in FIG. 3 is that conference system 3 includes a plurality of microphone modules 1 and a plurality of digital signal processing modules 30 in order to connect more microphones 11, while the system maintains the operation with the plurality of digital signal processing modules 30 to achieve multiplexing and reduce the system load. It is worth noting that the plurality of digital signal processing modules 30 still shares a single mixer 34 in this embodiment.

In summary, the present invention provides a conference system able to adjust audio input independently. In comparison to the conventional technique, the advantages of the present invention are flexibility and cost-efficiency in both deployment and following maintenance.

While the invention has been described in connection with what is presently considered to the most practical and preferred embodiment, it is to be understood that the invention is not to be limited to the disclosed embodiment, but on the contrary, is intended to cover various modifications and equivalent arrangement included within the spirit and scope of the appended claims.

## Claims

1. A conference system for independently adjusting audio parameters , said
system comprising:
a microphone module 1, comprising a plurality of microphones 11 connected in a single-loop and/or dual-loop manner, for generating at least one or more audio signals;
a storage module, pre-set with a plurality of audio adjustment parameters corresponding to said plurality of microphones 11;
a digital signal processing module, electrically connected to said microphone module 1 and said storage module, for receiving said audio signals and accessing said storage modules for said adjustment parameters corresponding to said audio signals, said digital signal processing module further comprising:
a priority controller, for determining priority order of said audio signals generated by said microphones 11 to enter said digital signal processing module;
a volume controller 31, electrically connected to said priority controller, for adjusting volume of said audio signals according to said audio adjust parameters;
an equalizer 32, electrically connected to said volume controller 31, for compensating and rectifying said audio signals according to said audio adjustment parameters;
a feedback suppressor 33, electrically connected to said equalizer 32, for eliminating feedback interference of said audio signals according to said audio adjustment parameters; and
a mixer, electrically connected to said feedback suppressor 33, for mixing a plurality of audio signals and outputting a mixed audio signal;
an amplifier 35, electrically connected to said mixer 34 of said digital signal processing module, for amplifying said mixed audio signal and outputting to at least one or more speakers.

2. The conference system 3 as claimed in Claim 1, wherein said microphones 11 of said microphone module 1 are wired microphones 11 or wireless microphones 11.

3. The conference system 3 as claimed in Claim 1, wherein said storage module 36 is a harddisk, flash memory or memory card.

4. The conference system as claimed in Claim 1, wherein said digital signal processing module, said volume controller 31, said equalizer 32, said feedback suppressor 33, said mixer, said amplifier 35 and said priority controller 37 are of a form of hardware of IC, firmware burned into IC, or software written in programming language, and read and executed by a microprocessor.

5. The conference system as claimed in Claim 1, wherein said digital signal processing module uses said volume controller 31, said equalizer 32, said feedback suppressor 33 to adjust said audio signal, and stores audio adjustment parameters after each adjustment back to said storage module.

6. The conference system as claimed in Claim 1, wherein said storage module 36 is located inside or outside of said digital signal processing module.

7. A conference system for independently adjusting audio inputs, said system comprising a plurality of microphone modules 1, a plurality of digital signal processing modules, a storage module 36 and an amplifier 35, wherein:
each said microphone module 1, further comprising a plurality of microphones 11 connected in a single-loop and/or dual-loop manner, for generating at least one or more audio signals;
a storage module, pre-set with a plurality of audio adjustment parameters corresponding to said plurality of microphones 11;
each said digital signal processing module, being electrically connected to said corresponding microphone module 1 and said storage module, for receiving said audio signals and accessing said storage modules for said adjustment parameters corresponding to said audio signals, said digital signal processing module further comprising:
a priority controller, for determining priority order of said audio signals generated by said microphones 11 to enter said digital signal processing module;
a volume controller 31, electrically connected to said priority controller, for adjusting volume of said audio signals according to said audio adjust parameters;
an equalizer 32, electrically connected to said volume controller 31, for compensating and rectifying said audio signals according to said audio adjustment parameters;
a feedback suppressor 33, electrically connected to said equalizer 32, for eliminating feedback interference of said audio signals according to said audio adjustment parameters; and
a mixer, electrically connected to said feedback suppressor 33, for mixing a plurality of audio signals and outputting a mixed audio signal;
an amplifier 35, electrically connected to said mixer 34 of said digital signal processing module, for amplifying said mixed audio signal and outputting to at least one or more speakers.

8. The conference system as claimed in Claim 7, wherein said microphones 11 of said microphone module 1 are wired microphones 11 or wireless microphones 11.

9. The conference system as claimed in Claim 7, wherein said storage module 36 is a harddisk, flash memory or memory card.

10. The conference system as claimed in Claim 7, wherein said digital signal processing module, said volume controller 31, said equalizer 32, said feedback suppressor 33, said mixer, said amplifier 35 and said priority controller 37 are of a form of hardware of IC, firmware burned into IC, or software written in programming language, and read and executed by a microprocessor.

11. The conference system as claimed in Claim 7, wherein said digital signal processing module uses said volume controller 31, said equalizer 32, said feedback suppressor 33 to adjust said audio signal, and stores audio adjustment parameters after each adjustment back to said storage module.

12. The conference system as claimed in Claim 7, wherein said storage module 36 is located inside or outside of said digital signal processing module.

13. The conference system as claimed in Claim 7, wherein said plurality of digital signal processing modules shares a single said mixer.
